# EUROPÄISCHE PATENTANMELDUNG

(11) **EP 1 844 854 A1**
(43) Veröffentlichungstag der Anmeldung: **17.10.2007**
(21) Anmeldenummer: 07006655.0
(22) Anmeldetag: 30.03.2007
(51) Int. Cl.: B01J 20/26, B01J 41/04, C02F 1/28

(54) **Oxoanionen-Adsorbierende Ionenaustauscher**

(30) Priorität: 11.04.2006 DE 102006017372
(71) Anmelder: Lanxess Deutschland GmbH & Co.KG, 51369 Leverkusen (DE)
(72) Erfinder: Klipper, Reinhold, Dr., 50933 Köln (DE); Podszun, Wolfgang, Dr., 80469 München (DE); Neumann, Stefan, Dr., 51061 Köln (DE); Schäfer, Holger, 50733 Köln (DE); Linn, Thomas, Dr., 41517 Grevenbroich (DE); Zarges, Wolfgang, Dr., 51069 Köln (DE)

(57) **Zusammenfassung**

Die vorliegende Erfindung betrifft ein Verfahren zur Herstellung Eisenoxid/Eisenoxihydroxid-haltiger schwach basischer Anionenaustauscher hergestellt nach dem Phthalimidverfahren sowie deren Verwendung zur Entfernung von Oxoanionen und deren Thio-Analaga, bevorzugt von Arsen, aus Wasser und wässrigen Lösungen sowie ein Regenerierungsverfahren.

## Beschreibung

Die vorliegende Erfindung betrifft ein Verfahren zur Herstellung Eisenoxid/Eisenoxihydroxid-haltiger schwach basischer Anionenaustauscher hergestellt nach dem Phthalimidverfahren sowie deren Verwendung zur Entfernung von Oxoanionen sowie deren Thio-Analoga aus Wasser und wässrigen Lösungen.

Oxoanionen im Sinne der vorliegenden Erfindung haben die Formel XₙOₘ⁻, XₙOₘ²⁻, XₙOₘ³⁻, HXₙOₘ⁻ oder H₂XₙOₘ²⁻ und deren Thio-Analoga, worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, P, S, Cr, Ti, Te, Se, V, As, Sb, W, Mo, U, Os, Nb, Bi, Pb, Co, Ni, Fe, Mn, Ru, Re, Tc, Al, B oder ein Nichtmetall der Reihe F, Cl, Br, J, CN, C, N steht. Erfindungsgemäß bevorzugt steht der Begriff Oxoanionen für die Formeln XOₘ²⁻ , XOₘ³⁻, HXOₘ⁻ oder H₂XOₘ²⁻, worin m für eine ganze Zahl 3 oder 4 steht und X für ein Metall oder Übergangsmetall der oben genannten Reihe, bevorzugt für P, S, Cr, Te, Se, V, As, Sb, W, Mo, Bi, oder ein Nichtmetall der Reihe Cl, Br, J, C, N steht. Erfindungsgemäß besonders bevorzugt steht der Begriff Oxoanionen für Oxoanionen des Arsens in den Oxidationsstufen (III) und (V), des Antimons in den Oxidationsstufen (III) und (V), des Schwefels als Sulfat, des Phosphors als Phosphat, des Chroms als Chromat, des Wismuts als Bismutat, des Molybdäns als Molybdat, des Vanadiums als Vanadat, des Wolframs als Wolframat, des Selens als Selenat, des Tellur als Tellurat oder des Chlors als Chlorat oder Perchlorat. Erfindungsgemäß insbesondere bevorzugte Oxoanionen sind H₂AsO₃⁻, H₂AsO₄⁻, HAsO₄²⁻, AsO₄³⁻, H₂SbO₃⁻ , H₂SbO₄⁻, HSbO₄²⁻, SbO₄³⁻, SeO₄²⁻, ClO₃⁻, ClO₄⁻, BiO₄²⁻, SO₄²⁻, PO₄³⁻ und deren Thio-Analoga. Erfindungsgemäß ganz besonders bevorzugt sind die Oxoanionen H₂AsO₃⁻, H₂AsO₄⁻, HAsO₄²⁻, AsO₄³⁻ und SeO₄²⁻ sowie deren Thio-Analoga. Erfindungsgemäß umfasst also der Begriff Oxoanionen auch die Thio-Analoga, worin in den oben genannten Formeln O durch S ersetzt wird.

Die Anforderungen an die Reinheit von Trinkwasser haben in den letzten Jahrzehnten deutlich zugenommen. Gesundheitsbehörden zahlreicher Länder haben Grenzwerte für Schwermetallkouzentrationen in Wässern erarbeitet. Dies betrifft insbesondere Schwermetalle wie Arsen, Antimon oder Chrom.

Unter bestimmten Bedingungen können beispielsweise Arsenverbindungen aus Gesteinen ausgelaugt werden und damit ins Grundwasser gelangen. In natürlichen Gewässern kommt Arsen als oxidische Verbindung mit drei- und fünfwertigem Arsen vor. Dabei zeigt sich, dass bei den in natürlichen Gewässern vorherrschenden pH-Werten hauptsächlich die Spezies H₃AsO₃, H₂AsO₃ , H₂AsO₄ , HAsO₄²⁻ auftreten.

Neben den Chrom-, Antimon- und Selen- Verbindungen sind leicht resorbierbare ArsenVerbindungen hoch toxisch und krebserregend. Aber auch das aus dem Erzabbau ins Grundwasser gelangende Wismut ist gesundheitlich nicht unbedenklich.

In vielen Regionen der USA, Indien, Bangladesch, China sowie in Südamerika kommen zum Teil sehr hohe Konzentrationen an Arsen im Grundwasser vor.

Zahlreiche medizinische Studien belegen nun, dass sich bei Menschen, die über eine lange Zeit hohen Arsen Belastungen ausgesetzt sind, infolge chronischer Arsenvergiftung krankhafte Hautveränderungen (Hyperkeratosen) und verschiedene Tumorarten entwickeln können.

Aufgrund medizinischer Studien empfahl die Weltgesundheitsorganisation WHO 1992, weltweit einen Grenzwert für Arsen im Trinkwasser von 10 µg/L einzuführen.

In vielen Staaten Europas und in den USA wird dieser Wert noch immer überschritten. In Deutschland werden seit 1996 10 µg/L eingehalten, in Ländern der EU gilt der Grenzwert von 10 µg/L ab 2003, in den USA ab 2006.

Ionenaustauscher werden in vielfaltiger Weise zur Reinigung von Rohwässern, Abwässern und wässrigen Prozessströmen eingesetzt. Auch zur Entfernung von Oxoanionen, beispielsweise dem Arsenat sind Ionenaustauscher geeignet. So beschreiben R. Kunin und J. Meyers in Journal of American Chemical Society, Band. 69, Seite 2874 ff (1947) den Austausch von Anionen, wie beispielsweise Arsenat mit Ionenaustauschern, die primäre, sekundäre, und tertiäre Amingruppen aufweisen.

Die Entfernung von Arsen aus Trinkwasser mit Hilfe von Ionenaustauschern wird auch in der Monographie Ion Exchange at the Millenium, Imperial College Press 2000, Seite 101 ffbeschrieben. In diesem Falle wurden stark basische Anionenaustauscher mit unterschiedlichen Strukturparametern, z.B. Harze mit Trimethylammoniumgruppen, die sogenannten Typ-I-Harze, auf Styrol oder Acrylatbasis und Harze mit Dimethylhydroxyethylammoniumgruppen, die sogenannten Typ-II-Harze, untersucht.

Nachteilig bei den bekannten Anionenaustauschern ist allerdings, dass sie nicht die gewünschte und notwendige Selektivität und Kapazität für Oxoanionen, insbesondere gegenüber Arsenationen, aufweisen. Deshalb ist in Anwesenheit der üblichen im Trinkwasser vorkommenden Anionen die Aufnahmekapazität für Arsenationen nur gering.

I. Rau et al, Reactive & Functional Polymers 54, ( 2003 ) 85-94 beschreiben die Entfernung von Arsenationen mit Chelatharzen mit Iminodiessigsäuregruppen, die mit Eisen(III)Ionen belegt (chelatisiert) wurden. Bei ihrer Herstellung wird das Chelatharz mit Iminodiessigsäuregnippen in der Säureform mit Eisen(III)Ionen belegt (chelatisiert). Die Ausbildung einer für Arsen hochspezifischen Eisenoxid/Eisenoxihydroxidphase erfolgt hierbei nicht, da bei der Belegung mit Fe(III)-Ionen darauf geachtet wird, den pH-Wert von 2 nicht zu überschreiten (dieselbe Schrift, Seite 88). Daher ist dieser Adsorber nicht in der Lage Arsenionen bis auf die gesetzlich geforderten Restmengen aus wässrigen Lösungen zu entfernen.

In WO 2004/110623 A1 wird ein Verfahren zur Herstellung eines Eisenoxid/Eisenoxihydroxid-haltigen sowie Carboxylgruppen-haltigen Ionenaustauschers beschrieben. Dieses Material adsorbiert Arsen bis zu niedrigen Restkonzentrationen ist aber in seiner Aufnahmekapazität limitiert.

Aus der US 2005/0156136 ist ein weiteres Verfahren zur Herstellung von selektiven Adsorbern für die Entfernung von beispielsweise Arsen bekannt. Bei diesem Verfahren werden Anionenaustauscher mit Oxidationsmitteln, wie z.B. Kaliumpermanganat und Metallsalzen, wie z.B. Eisen-(II)-Sulfat zur Reaktion gebracht. In US 2005/0156136 wird darauf verwiesen, dass ohne den Oxidationsschritt die Beladung des Anionenaustauschers mit Metallkationen wegen der abstoßenden Kräfte zwischen Anionenaustauscher-Matrix und Metallkationen nicht in gewünschtem Ausmaß gelingt. Nachteilig bei dem Verfahren gemäß US 2005/0156136 ist zudem, dass Ionenaustauscher durch die Reaktion mit Oxidationsmitteln geschädigt werden und in Folge dessen ein erhöhtes Ausbluten und eine verringerte Lebensdauer aufweisen.

Die EP-A 1 568 660 offenbart ein Verfahren zur Entfernung von Arsen aus Wasser durch in Kontakt-bringen mit einem starkbasischen Anionenaustauscher, der ein speziell definiertes Metallion oder ein metallhaltiges Ion enthält. In EP-A 1 568 660 wird darauf hingewiesen, dass die Selektivität gegenüber Arsen ansteigt, wenn sekundäre und tertiäre Amingruppen durch Alkylierung in quarternäre Ammoniumgruppen überführt werden.

Als stark basische Anionenaustauscher werden in EP-A 1 568 660 Anionenaustauscher bezeichnet, die positive Ladungen tragen, die wiederum verbunden sind mit Anionen wie Cl ⁻, Br⁻, F⁻ oder OH⁻.

Quaternäre Amine werden gemäß EP-A 1 568 660 beispielsweise aus tertiären Aminen durch Addition einer Alkylgruppe hergestellt. Schwachbasische Anionenaustauscher hingegen enthalten primäre und / oder sekundäre und / oder tertiäre Aminogruppen.

Die aus dem Stand der Technik bekannten Arsenadsorber zeigen noch nicht die gewünschten Eigenschaften hinsichtlich Selektivität und Kapazität. Es besteht daher ein Bedarf nach neuen für Arsenionen spezifischen Ionenaustauschern bzw. Adsorbern in Perlform, die einfach herzustellen sind und eine verbesserte Arsenadsorption aufweisen.

Die Lösung der Aufgabe und somit Gegenstand der vorliegenden Erfindung ist ein Verfahren zur Herstellung Eisenoxid/Eisenoxihydroxid-haltiger schwachbasischer Anionenaustauscher, dadurch gekennzeichnet, dass man
a) einen perlförmigen schwachbasischen Anionenaustauscher hergestellt nach dem Phthalimidverfahren in wässrigem Medium mit Eisen(II)Salzen oder mit Eisen(III)-Salzen in Kontakt bringt und
b) die aus a) erhaltene Mischung durch Zugabe von Alkali- oder Erdalkalihydroxiden auf pH-Werte im Bereich von 2,5 bis 12 einstellt und nach bekannten Methoden die erhaltenen Eisenoxid/Eisenoxihydroxid-enthaltenden Ionenaustauscher isoliert.

Angesichts des Standes der Technik war es überraschend, dass diese neuen Eisenoxid/Eisenoxihydroxid-haltigen schwachbasischen Anionenaustauscher in einfacher Reaktion darstellbar sind und eine gegenüber dem Stand der Technik nicht nur deutlich verbesserte Oxoanionen-Adsorption zeigen, sondern auch generell für den Einsatz zur Adsorption von Oxoanionen, bevorzugt von Arsenaten, Antimonaten, Phosphaten, Chromaten, Molybdaten, Wismutaten, Wolframaten, Seleniten oder Selenaten, besonders bevorzugt von Arsenaten und Antimonaten der Oxidationsstufen (III) und (V), Seleniten und Selenaten aus wässrigen Lösungen geeignet sind. Dies gilt ebenfalls für deren Thio-Analoga.

Die erfindungsgemäß für die Adsorption von Oxoanionen und deren Thio-Analoga einzusetzenden schwachbasischen Anionenaustauscher können sowohl heterodispers als auch monodispers sein. Erfindungsgemäß bevorzugt werden monodisperse schwachbasische Anionenaustauscher eingesetzt. Ihre Teilchengröße beträgt im Allgemeinen 250 bis 1250 µm, bevorzugt 300 bis 650 µm.

Die den erfindungsgemäßen monodispersen schwachbasischen Anionenaustauschern zugrunde liegenden monodispersen Perlpolymerisate können nach bekannten Verfahren wie z.B. Fraktionieren, Verdüsen, Jetting oder nach der Seed-Feed-Technik hergestellt werden.

Die Herstellung monodisperser Ionenaustauscher ist dem Fachmann prinzipiell bekannt. Man unterscheidet neben der Fraktionierung heterodisperser Ionenaustauscher durch Siebung im wesentlichen zwei Direktherstelhmgsverfahren nämlich das Verdüsen oder Jetting und das Seed-Feed-Verfahren beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann. Erfindungsgemäß werden monodisperse, schwachbasische Anionenaustauscher erhältlich durch Verdüsungsverfahren oder Jetting bevorzugt für die Adsorption von Oxoanionen eingesetzt.

Als monodispers werden in der vorliegenden Anmeldung solche Perlpolymerisate bzw. Ionenaustauscher bezeichnet, bei denen der Gleichheitskoeffizient der Verteilungskurve kleiner oder gleich 1,2 ist. Als Gleichheitskoeffizient wird der Quotient aus den Größen d60 und d10 bezeichnet. D60 beschreibt den Durchmesser, bei welchem 60 Massen-% in der Verteilungskurve kleiner und 40 Massen-% größer oder gleich sind. D10 bezeichnet den Durchmesser, bei welchem 10 Massen-% in der Verteilungskurve kleiner und 90 Massen-% größer oder gleich sind.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung sowie einem Initiator oder Initiatorgemisch und gegebenenfalls einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. Erfindungsgemäß können sowohl gelförmige als auch makroporöse monodisperse schwachbasische Anionenaustauscher eingesetzt werden. In einer bevorzugten Ausführungsform der vorliegenden Erfindung werden monodisperse schwachbasische Anionenaustauscher eingesetzt zu deren Herstellung monodisperse Perlpolymerisate unter Einsatz mikroverkapselter Monomertröpfchen verwendet werden. Dem Fachmann sind die verschiedenen Herstellverfahren monodisperser Perlpolymerisate sowohl nach dem Jetting Prinzip als auch nach dem Seed-Feed Prinzip aus dem Stand der Technik bekannt. An dieser Stelle sei verwiesen auf US-A 4,444 961, EP-A 0 046 535, US-A 4,419,245 und WO 93/12167.

Als monovinylaromatische ungesättigte Verbindungen werden erfindungsgemäß bevorzugt Verbindungen wie Styrol, Vinyltoluol, Ethylstyrol, alpha-Methylstyrol, Chlorstyrol oder Chlormethylstyrol eingesetzt.

Als polyvinylaromatische Verbindungen (Vernetzer) werden Divinylgruppen-tragende aliphatische oder aromatische Verbindungen eingesetzt. Dazu gehören bevorzugt Divinylbenzol, Divinyltoluol, Trivinylbenzol, Ethylenglykoldimethacrylat, Trimethylolpropantrimethacrylat, Hexadien 1.5, Octadien 1.7, 2,5-Dimethyl-1,5-hexadien sowie Divinylether.

Geeignete Divinylether sind Verbindungen der allgemeinen Formel (II), 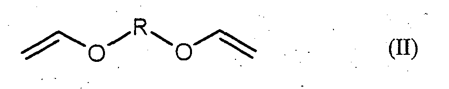 worin
- R: für einen Rest der Reihe CₙH₂ₙ,(CₘH₂ₘ-O)ₚ-CₘH₂ₘ oder CH₂-C₆H₄-CH₂ steht und n ≥2, m = 2 bis 8 und p≥2 bedeuten.

Geeignete Polyvinylether im Falle n >2 sind Trivinylether von Glycerin, Trimethylolpropan oder Tetravinylether des Pentaerythrits.

Bevorzugt werden Divinylether von Ethylenglykol, Di-, Tetra- oder Polyethylenglykol, Butandiol oder Poly-THF oder die entsprechenden Tri- oder Tetravinylether eingesetzt. Besonders bevorzugt sind die Divinylether von Butandiol und Diethylenglykol wie sie in der EP-A 1 110 608 beschrieben sind.

Die alternativ zur gelförmigen Eigenschaft gewünschte makroporöse Eigenschaft wird den Ionenaustauschern bereits bei der Synthese von deren Vorstufen, den Perlpolymerisaten, gegeben. Die Zugabe von sogenanntem Porogen ist dazu zwingend erforderlich. Der Zusammenhang von Ionenaustauschern und ihrer makroporösen Struktur ist in der deutschen Auslegeschrift DE 1045102 (1957) und in der Deutschen Auslegeschrift DE 1113570 (1957) beschrieben. Als Porogen für die Herstellung erfindungsgemäß einzusetzender makroporöser Perlpolymerisate um makroporöse Anionenaustauscher zu erhalten sind vor allem organische Substanzen geeignet, die sich im Monomeren lösen, das Polymerisat aber schlecht lösen bzw. quellen. Beispielhaft seien aliphatische Kohlenwasserstoffe wie Octan, Isooctan, Decan, Isododecan. Weiterhin gut geeignet sind Alkohole mit 4 bis 10 Kohlenstoffatomen, wie Butanol, Hexanol und Octanol.

Neben den monodispersen gelförmigen schwachbasischen Anionenaustauschern sind erfindungsgemäß bevorzugt monodisperse schwachbasische Anionenaustauscher mit makroporöser Struktur zur Adsorption von Oxoanionen einzusetzen. Der Begriff "makroporös" ist dem Fachmann bekannt. Einzelheiten werden beispielsweise in J.R. Millar et al J.Chem.Soc.1963, 218 beschrieben. Die makroporösen Ionenaustauscher besitzen ein durch Quecksilberporosimetrie ermitteltes Porenvolumen von 0,1 bis 2,2 ml/g, vorzugsweise von 0,4 bis 1,8 ml/g.

Die Funktionalisierung der nach dem Stand der Technik erhältlichen Perlpolymerisate zu monodispersen, schwachbasischen Anionenaustauschern ist dem Fachmann ebenfalls weitgehend aus dem Stand der Technik bekannt. So beschreibt beispielsweise EP-A 1 078 688 ein Verfahren zur Herstellung monodisperser, makroporöser Anionenaustauscher mit schwachbasischen Gruppen nach dem sogenannten Phthalimidverfahren, indem man
a) Monomertröpfchen aus mindestens einer monovinylaromatischen Verbindung und mindestens einer polyvinylaromatischen Verbindung sowie einem Porogen und einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt und
d) das aminomethylierte Perlpolymerisat durch partielle Alkylierung zu schwachbasischen Anionenaustauschern mit tertiären Aminogruppen reagieren lässt.

Erfindungsgemäß werden für die Adsorption von Oxoanionen und deren Thio-Analoga aus Wässern oder wässrigen Lösungen monodisperse, schwachbasische, gelförmige oder makroporöse Anionenaustauscher hergestellt nach dem Phthalimidverfahren, wie es beispielsweise in der bereits oben genannten EP-A 1 078 688 beschrieben wird, eingesetzt. Die im Rahmen der vorliegenden Erfindung gewonnenen Erkenntnisse zeigen, dass die gemäß dem Phthalimidverfahren nach EP-A 1 078 688 erhältlichen monodispersen Ionenaustauscher einen Substitutionsgrad von bis zu ca.1,8 aufweisen, d.h. pro aromatischem Kern werden im statistischen Mittel bis zu 1,8 Wasserstoffatome durch CH₂NH₂-Gruppen oder andere schwach basische Gruppen substituiert. Insbesondere bevorzugt werden erfindungsgemäß monodisperse, makroporöse schwachbasische Anionenionenaustauscher hergestellt nach dem Phthalimidverfahren eingesetzt.

Im Gegensatz dazu werden die in EP-A 1 568 660 beschriebenen schwachbasischen Anionenaustauscher nach dem Chlormethylierungsverfahren hergestellt, wobei vernetzte Perlpolymerisate - meist auf Styrol/Divinylbenzol Basis - chlormethyliert und anschließend mit Aminen umgesetzt werden (Helfferich, Ionenaustauscher, Seite 46 -58 , Verlag Chemie, Weinheim, 1959) sowie EP-A 0 481 603. Bei der Reaktion von chlormethyliertem Perlpolymerisat mit z.B. Dimethylamin erfolgt die Bildung von Stickstoffbrücken unter Ausbildung quartärer Amine.

Die erfindungsgemäß für die Adsorption von Oxoanionen und deren Thio-Analoga einzusetzenden schwachbasischen Anionenaustauscher hergestellt nach dem Phthalimidverfahren sind in ihrer Struktur einheitlich. Überraschenderweise wurde gefunden, dass durch die im Gegensatz zum Chlormethylierungsverfahren fehlende Nachvernetzung ein deutlich höherer Substitutionsgrad der aromatischen Kerne mit funktionellen Gruppen erzielt werden kann und damit eine höhere Austauschkapazität des schwach basischen Anionenaustauschers erzielt wird, der als Basis für den erfindungsgemäß einzusetzenden Oxoanionen-Austauscher dient. Darüber hinaus zeigten die Arbeiten im Rahmen der vorliegenden Erfindung eine deutlich höhere Ausbeute schwachbasischen hochkapazitiven Anionenaustauschers bezogen auf die eingesetzten Monomere, als die nach EP-A 1 568 660 gemäß dem Chlormethylierimgsverfahren hergestellten schwachbasischen Anionenaustauscher.

Man erhält folglich auf Basis hoch kapazitiver, schwachbasischer Anionenaustauscher nach dem Phthalimidverfahren hochkapazitive Eisenoxid/Eisenoxihydroxid-haltige schwach basische Anionenaustauscher die sich hervorragend zur Adsorption von Oxoanionen und deren Thio-Analoga eignen.

Das Dotieren des schwachbasischen Anionenaustauschers zu einem Eisenoxid/Eisenoxihydroxid-enthaltenden Ionenaustauscher gemäß Verfahrensschritt a) erfolgt mit Eisen(II)salzen oder Eisen(III)salzen, in einer bevorzugten Ausführungsform mit einem nicht Komplexe bildenden Eisen(II)salz oder Eisen(III)salz. Als Eisen-(III)-Salze im Verfahrensschritt a) des erfindungsgemäßen Verfahrens können lösliche Eisen-(III)-Salze eingesetzt werden, bevorzugt Eisen(III)chlorid, Eisen(III)sulfat oder Eisen(III)nitrat.

Als Eisen-(II)-Salze können alle löslichen Eisen-(II)-Salze eingesetzt werden. Bevorzugt werden Eisen(II)chlorid, Eisen(II)sulfat oder Eisen(II)nitrat eingesetzt. Bevorzugt erfolgt die Oxidation der Eisen(II)Salze zu Eisen(III)Salzen in der Suspension im Verfahrensschritt a) durch Luft.

Die Eisen(II)Salze bzw. Eisen(III)Salze können in Substanz oder als wässrige Lösungen eingesetzt werden.

Die Konzentration der Eisensalze in wässriger Lösung ist frei wählbar. Bevorzugt werden Lösungen mit Eisensalzgehalten von 20 bis 40 Gew.-% eingesetzt.

Die Dosierung der wässrigen Eisensalzlösung ist zeitlich unkritisch. Sie kann in Abhängigkeit von den technischen Gegebenheiten so zügig wie möglich erfolgen.

Die schwachbasischen Anionenaustauscher können unter Rühren oder durch Filtration in Säulen mit den Eisensalzlösungen in Kontakt gebracht werden.

Pro Mol eingesetztem Eisensalz werden 1 bis 10 Mol, bevorzugt 3 bis 6 Mol Alkali- oder Erdalkalihydroxide eingesetzt.

Pro Mol basischer Gruppe im Ionenaustauscher werden 0,1 bis 3 Mol, bevorzugt 0,3 bis 2 Mol Eisensalz eingesetzt.

Die Einstellung des pH-Wertes im Verfahrensschritt b) erfolgt mittels Alkali- oder Erdalkalihydroxiden, insbesondere Kaliumhydroxid, Natriumhydroxid oder Calziumhydroxid, Alkali- oder Erdalkalicarbonaten oder Hydrogencarbonaten.

Der pH-Wert Bereich, in dem die Bildung von Eisenoxid/Eisenoxihydroxidgruppen erfolgt, liegt im Bereich zwischen 2 und 12, bevorzugt 3 und 9.

Die genannten Stoffe werden bevorzugt als wässrige Lösungen eingesetzt.

Die Konzentration der wässrigen Alkalihydroxid- bzw. Erdalkalihydroxid- Lösungen kann bis zu 50 Gew.-% betragen. Bevorzugt werden wässrige Lösungen mit einer Alkalihydroxid- bzw. Erdalkalihydroxid- Konzentration im Bereich 20 bis 40 Gew.-% eingesetzt.

Die Geschwindigkeit der Dosierung der wässrigen Lösungen an Alkali- bzw. Erdalkalihydroxid ist abhängig von der Höhe des gewünschten pH-Wertes und den technischen Gegebenheiten. Beispielsweise werden 60 Minuten hierzu benötigt.

Nach Erreichen des gewünschten pH-Wertes werden 1 bis 10 Stunden, bevorzugt 2 bis 4 Stunden nachgerührt.

Die Dosierung der wässrigen Lösungen an Alkali- bzw. Erdalkalihydroxid erfolgt bei Temperaturen zwischen 10 und 90°C, bevorzugt bei 30 bis 60°C.

Pro Milliliter basische Gruppen tragendem Ionenaustauscherharz werden 0,5 bis 3 ml entionisiertes Wasser eingesetzt, um eine gute Rührfähigkeit des Harzes zu erreichen.

Ohne für die vorliegende Anmeldung einen Mechanismus vorzuschlagen werden im Verfahrensschritt b) wahrscheinlich durch die pH-Wert-Änderung in den Poren der Ionenaustauscherharze FeOOH-Verbindungen gebildet, die an der Oberfläche frei zugängliche OH-Gruppen tragen. Die Oxoanionenentfernung, bevorzugt die Arsenentfernung, erfolgt dann wahrscheinlich über einen Austausch OH⁻ gegen beispielsweise HAsO₄²⁻ bzw. H₂AsO₄⁻ unter Ausbildung einer AsO-Fe-Bindung.

Die vorliegende Erfindung betrifft aber auch schwachbasische Anionenaustauscher erhältlich durch a) in Kontakt bringen eines perlförmigen schwachbasischen Anionenaustauschers in wässrigem Medium mit Eisen(II)-Salzen oder mit Eisen(III)-Salzen und b) Einstellen der aus a) erhaltenen Mischung durch Zugabe von Alkali- oder Erdalkalihydroxiden auf pH-Werte im Bereich von 2,5 bis 12 und Isolieren der erhaltenen Eisenoxid/Eisenoxihydroxid-enthaltenden Ionenaustauscher nach bekannten Methoden.

Wie bereits oben beschrieben gleichermaßen zum Ionenaustausch befähigt sind auch zu HAsO₄²⁻ bzw. H₂AsO₄⁻ isostrukturelle Ionen wie z. B. Dihydrogenphosphate, Vanadate, Molybdate, Wolframate, Antimonate, Wismutate, Selenate oder Chromate. Die erfindungsgemäß zu synthetisierenden schwach basischen Anionenaustauscher eignen sich insbesondere bevorzugt zur Adsorption der Spezies H₂AsO₃⁻, H₂AsO₄⁻, HAsO₄²⁻, AsO₄³⁻, H₂SbO₃⁻, H₂SbO₄⁻, HSbO₄²⁻, SbO ₄³⁻ oder SeO ₄²⁻ Dies betrifft auch deren Thio-Analoga. Insbesondere ganz besonders bevorzugt eignen sich die erfindungsgemäß einzusetzenden Eisenoxid/Eisenoxihydroxid-haltigen schwach basischen Anionenaustauscher zur Adsorption von Arsen, bevorzugt in Form seiner Oxoanionen, aus Wasser oder wässrigen Lösungen.

Erfindungsgemäß wird bei der Synthese des Eisenoxid/Eisenoxihydroxid-haltigen schwach basischen Anionenaustauschers bevorzugt NaOH oder KOH als Base eingesetzt. Es kann aber auch jede andere Base verwendet werden, die zur Ausbildung von FeOH-Gruppen führt, wie beispielsweise NH₄OH, Na₂CO₃, CaO, Mg(OH)₂ usw.

Isolieren im Sinne der vorliegenden Erfindung bedeutet ein Abtrennen des Ionenaustauschers aus der wässrigen Suspension und dessen Reinigung. Die Abtrennung erfolgt nach den für den Fachmann bekannten Maßnahmen wie Dekantieren, Zentrifugieren, Filtrieren. Die Reinigung erfolgt durch Waschen mit beispielsweise entionisiertem Wasser und kann eine Klassierung zur Abtrennung von Feinanteilen bzw. Grobanteilen beinhalten. Gegebenenfalls kann der erhaltene Eisenoxid/Eisenoxihydroxid-enthaltende schwachbasische Anionenaustauscher getrocknet werden, bevorzugt durch reduzierten Druck und/oder besonders bevorzugt bei Temperaturen zwischen 20°C und 180°C.

Überraschenderweise adsorbieren die erfindungsgemäßen Eisenoxid/Eisenoxihydroxid-haltigen schwachbasischen Anionenaustauscher nicht nur Oxoanionen, beispielsweise des Arsen in seinen verschiedensten Formen, sondern daneben zusätzlich Schwermetalle wie beispielsweise Kobalt, Nickel, Blei, Zink, Cadmium, Kupfer.

Die erfindungsgemäßen Eisenoxid/ Eisenoxihydroxid-haltigen schwachbasischen Anionenaustauscher können zur Reinigung von Oxoanionen enthaltenden Wässern jeglicher Art, bevorzugt von Trinkwasser, von Abwasserströmen der chemischen Industrie oder von Müllverbrennungsanlagen sowie von Grubenwässern oder Sickerwässern von Deponien verwendet werden.

Die erfindungsgemäßen Eisenoxid/Eisenoxihydroxid-haltigen schwachbasischen Anionenaustauscher werden bevorzugt in für ihre Aufgaben geeigneten Vorrichtungen eingesetzt.

Die Erfindung betrifft deshalb auch von einer zu behandelnden Flüssigkeit durchströmbare Vorrichtungen, bevorzugt Filtrationseinheiten, besonders bevorzugt Adsorptionsbehälter, insbesondere Filteradsorptionsbehälter, gefüllt mit den Eisenoxid/Eisenoxihydroxid-haltigen schwachbasischen Anionenaustauschern, erhältlich nach dem in dieser Anmeldung beschriebenen Verfahren, zur Entfernung von Oxoanionen oder deren Thio-Analoga, bevorzugt Arsen, Antimon und Selen, insbesondere von Arsen, aus wässrigen Medien, bevorzugt Trinkwasser oder Gasen. Die Vorrichtungen können z.B. im Haushalt an die Sanitär- und Trinkwasserversorgung angeschlossen werden.

Es hat sich gezeigt, dass die erfindungsgemäß zur Adsorption von Oxoanionen und deren Thio-Analoga einzusetzenden schwachbasischen, nach Phthalimidverfahren hergestellten und Eisenoxid/Eisenoxihydroxid-haltigen Anionenaustauscher, sich durch alkalische NatriumchloridLösungen einfach regenerieren lassen. Gegenstand der vorliegenden Erfindung ist deshalb auch ein Regenerierungsverfahren schwach basischer, nach Phthalimidverfahren hergestellter und Eisenoxid/Eisenoxihydroxid-haltiger Anionenaustauscher, dadurch gekennzeichnet, dass man auf diese eine alkalische Natriumchlorid-Lösung einwirken lässt. Bevorzugt hat diese Natriumchlorid-Lösung einen Gehalt an Natriumchlorid von 0,1 bis 10 Gew.-%, besonders bevorzugt von 1 bis 3 Gew.-% und einen pH-Wert von 6 bis 13, bevorzugt von 8 bis 11, besonders bevorzugt von 9 bis 10. In einer bevorzugten Ausführungsform der Regeneration behandelt man den regenerierten Adsorber zusätzlich mit verdünnten, besonders bevorzugt 1-10 gew.-%igen Mineralsäuren, insbesondere bevorzugt mit Schwefelsäure oder Salzsäure.

### Untersuchungsmethoden

### Bestimmung der Aufnahmefähigkeit für Arsen in der Oxidationsstufe V:

Zur Messung der Adsorption von Arsen(V) werden in einer 300 ml Polyethylen-Flasche 24 Stunden lang 250 ml einer wässrigen Lösung von Na₂HAsO₄ mit einer Menge an As(V) von 2800 ppb auf einen pH Wert von 8,5 eingestellt und mit 0,3 ml Arsenadsorber geschüttelt. Nach 24 Stunden wird in der überstehenden Lösung die Restmenge an Arsen (V) analysiert.

### Bestimmung der Menge an basischen Aminomethylgruppen im aminomethylierten, vernetzten Polystyrol Perlpolymerisat

100 ml des aminomethylierten Perlpolymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml vollentsalztem Wasser und 100 ml ln Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminorilethyliertem Harz errechnet sich nach folgender Formel: (200 - V) · 20 = mol Aminomethylgruppen pro Liter Harz, worin V für Volumen der bei der Titration verbrauchten 1 n Natronlauge steht.

### Bestimmung des Substitutionsgrades der aromatischen Kerne des vernetzten Perlpolymerisates durch Aminomethylgruppen

Die Menge Aminomethylgruppen in der Gesamtmenge des aminomethylierten Harzes wird nach obiger Methode bestimmt.

Aus der Menge an eingesetztem Perlpolymerisat - A in Gramm - wird durch Division mit dem Molekulargewicht die in dieser Menge vorliegende Molmenge an Aromaten errechnet.

Beispielsweise werden aus 300 Gramm Perlpolymerisat 950 ml aminomethyliertes Perlpolymerisat mit einer Menge von 1,8 mol/l Aminomethylgruppen hergestellt.

950 ml aminomethyliertes Perlpolymerisat enthalten 2,82 mol Aromaten.

Pro Aromat liegen dann 1,8 / 2,81 = 0,64 mol Aminomethylgruppen vor.

Der Substitutionsgrad der aromatischen Kerne des vernetzten Perlpolymerisates durch Aminomethylgruppen beträgt 0,64.

### Beispiele:

### Beispiel 1

### 1a) Herstellung eines monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25 °C temperiert. Unter Rühren wird anschließend eine Mischung aus 3200 g mikroverkapselter Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertröpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung eines amidomethylierten Perlpolymerisates

Bei Raumtemperatur werden 3567 g Dichlorethan, 867 g Phthalimid und 604 g 29,8 gew.-%iges Formalin vorgelegt. Der pH Wert der Suspension wird mit Natronlauge auf 5,5 bis 6 eingestellt. Anschließend wird das Wasser destillativ entfernt. Dann werden 63,5 g Schwefelsäure zudosiert. Das entstehende Wasser wird destillativ entfernt. Der Ansatz wird abgekühlt. Bei 30°C werden 232 g 65 %iges Oleum und anschließend 403 g monodisperses Perlpolymerisat, hergestellt nach Verfahrensschritt 1a) eindosiert. Die Suspension wird auf 70°C erhitzt und weitere 6 Stunden bei dieser Temperatur gerührt.. Die Reaktionsbrühe wird abgezogen, voll entsalztes Wasser wird hinzudosiert und Restmengen an Dichlorethan werden destillativ entfernt.
Ausbeute an amidomethyliertem Perlpolymerisat 2600 ml
Elementaranalytische Zusammensetzung:

| | |
|---|---|
| Kohlenstoff: | 74,9 Gew. %; |
| Wasserstoff: | 4,6 Gew. %; |
| Stickstoff: | 6,0 Gew. %; |
| Rest: | Sauerstoff. |

### 1c) Herstellung eines aminomethylierten Perlpolymerisates

Zu 1250 ml amidomethyliertem Perlpolymerisat aus 1b) werden 624 g 50 gew.-%ige Natronlauge und 1093 ml vollentsalztes Wasser bei Raumtemperatur zudosiert. Die Suspension wird in 2 Stunden auf 180°C. erhitzt und 8 Stunden bei dieser Temperatur gerührt. Das erhaltene Perlpolymerisat wird mit vollentsalztem Wasser gewaschen.
Ausbeute an aminomethyliertem Perlpolymerisat : 1110 ml
Als Gesamtausbeute - hochgerechnet - ergeben sich 2288 ml .
Elementaranalytische Zusammensetzung :

| | |
|---|---|
| Stickstoff : | 12,6 Gew. % |
| Kohlenstoff: | 78,91Gew. %; |
| Wasserstoff: | 8,5 Gew. %. |

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,34 Wasserstoffatome durch Aminomethylgruppen substituiert wurden.
Bestimmung der Menge an basischen Gruppen : 2,41 mol/ Liter Harz

### 1d) Herstellung eines Perlpolymerisates mit tertiären Aminogruppen

In einem Reaktor werden 1380 ml voll entsalztes Wasser, 920 ml aminomethyliertes Perlpolymerisat aus 1c) und 490 g 29,7 gew.%ige Formalinlösung bei Raumtemperatur vorgelegt. Die Suspension wird auf 40°C erwärmt. Der pH Wert der Suspension wird durch Dosierung von 85 gew.-%iger Ameisensäure auf pH 3 eingestellt. Innerhalb von 2 Stunden wird die Suspension auf Rückflußtemperatur (97°C) erwärmt. Während dieser Zeit wird der pH Wert durch Dosierung von Ameisensäure bei 3,0 gehalten. Nach Erreichen der Rückflußtemperatur wird der pH Wert zunächst durch Dosierung von Ameisensäure, dann durch Dosierung von 50 gew.%iger Schwefelsäure auf 2 eingestellt. Es wird 30 Minuten bei pH 2 nachgerührt. Dann wird weiter 50gew.-%ige . Schwefelsäure dosiert und der pH Wert auf 1 eingestellt. Bei pH 1 und Rückflusstemperatur wird weitere 8,5 Stunden gerührt.

Der Ansatz wird abgekühlt, das Harz auf einem Sieb abfiltriert und mit voll entsalztem Wasser gewaschen.
Volumenausbeute : 1430 ml

In einer Säule werden über das Harz 2500 ml 4 gew. % ige wässrige Natronlauge filtriert. Anschließend wird mit Wasser gewaschen.
Volumenausbeute : 1010 ml
Elementaranalytische Zusammensetzung :

| | |
|---|---|
| Stickstoff : | 12,4 Gew. % |
| Kohlenstoff: | 76,2 Gew. %; |
| Wasserstoff: | 8,2 Gew. %; |

Bestimmung der Menge an basischen Gruppen : 2,22 mol/ Liter Harz

### Beispiel 2 Herstellung eines Arsenadsorbers auf Basis eines aminomethylierten Perlpolymerisates

271g 40 gew.-% ige wässrige Eisen(III)sulfatlösung werden bei Raumtemperatur in einem Reaktor vorgelegt. Dazu werden 40 ml voll entsalztes Wasser dosiert. Anschließend werden unter Rühren 300 ml aminomethyliertes Perlpolymerisat aus Beispiel 1c) und danach 50 ml voll entsalztes Wasser dosiert. Die Suspension hat einen pH Wert von 2,3. Mit 78 gew.-%iger Schwefelsäure wird der pH Wert der Suspension auf 1,0 eingestellt. Es wird 30 Minuten bei Raumtemperatur gerührt.

Mit 50 gew.-%iger Natronlauge wird nun der pH Wert der Suspension innerhalb von 45 Minuten auf pH 3,0 eingestellt. Es wird weitere, 60 Minuten bei pH 3,0 gerührt. Dann wird mit Natronlauge der pH Wert auf 3,5 angehoben und weitere 60 Minuten bei pH 3,5 gerührt.

Dann wird mit Natronlauge der pH-Wert auf 4,0 angehoben und weitere 60 Minuten bei pH 4,0 gerührt.

Dann wird mit Natronlauge der pH Wert auf 4,5 angehoben und weitere 60 Minuten bei pH 4,5 gerührt.

Dann wird mit Natronlauge der pH Wert auf 5,0 angehoben und weitere 120 Minuten bei pH 5,0 gerührt.

Während der gesamten Zeit der Dosierung von Natronlauge wird die Temperatur der Suspension durch Kühlung bei 20 - 25°C gehalten.

Die Suspension wird auf ein Sieb gegeben, man lässt die verbliebene Reaktionslösung ablaufen und wäscht den Ionenaustauscher auf dem Sieb mit voll entsalztem Wasser aus.
Ausbeute: 370 ml
100 ml feuchtes Harz wiegen getrocknet 41,96 Gramm
Eisengehalt : 14, 0 Gew. %
Natriumgehalt : 10 mg/kg trockenes Harz

### Beispiel 3 Herstellung eines Arsenadsorbers im Säulenverfahren

In eine Glassäule ( Länge 50 cm, Durchmesser 12 cm ) werden 183 ml voll entsalztes Wasser, 305 ml aminomethyliertes Perlpolymerisat aus Beispiel 1 c) vorgelegt. Von oben werden in 2 Stunden 212 ml 40 gew.-%ige, wässrige Eisen(III)sulfatlösung beaufschlagt. Anschließend wird von unten Luft durch die Suspension geleitet in der Weise, dass das Harz gewirbelt wird. Während des gesamten Ausfäll- und Beladungsvorganges wird mit Luft gewirbelt. Die Suspension zeigt einen pH Wert von 1,5 . Unter Wirbeln wird von oben 50 gew. % ige Natronlauge dosiert. Der pH Wert der Suspension wird schrittweise auf 3,0 : 3,5 : 4,0 : 4,5 : 5,0 eingestellt. Nach Erreichen der pH Wertabschnitte wird jeweils weitere 15 Minuten nachgewirbelt. Nach Erreichen von pH 5, 0 wird weitere 2 Stunden bei diesem pH Wert gewirbelt. Nach Erreichen des pH Wertes von 3,5 werden weitere 150 ml voll entsalztes Wasser dosiert. Anschließend wird das Harz auf ein Sieb gegeben und mit voll entsalztem Wasser ausgewaschen. Dann wird zur weiteren Reinigung das Harz in einer Glassäule 2 Stunden lang mit voll entsalztem Wasser von unten gespült und klassiert.
Verbrauch an 50 gew. % iger Natronlauge : 75 ml
Volumenausbeute : 350 ml
100 ml Harz wiegen getrocknet : 43,80 Gramm
Eisengehalt : 9,7 Gew. %
Natriumgehalt : 94 mg / kg trockenes Harz

### Beispiel 4 Herstellung eines Arsenadsorbers auf Basis eines Perlpolymerisates mit tertiären Aminogruppen

421 g 40 gew.-%ige wässrige Eisen(III)sulfatlösung werden bei Raumtemperatur in einem Reaktor vorgelegt. Dazu werden 180 ml voll entsalztes Wasser dosiert. Anschließend werden unter Rühren 500 ml Perlpolymerisat mit tertiären Aminogruppen aus Beispiel 1d ) und danach 50 ml voll entsalztes Wasser dosiert. Die Suspension hat einen pH Wert von 2,2. Mit 78 gew.-%iger Schwefelsäure wird der pH Wert der Suspension auf 1,0 eingestellt. Es wird 30 Minuten bei Raumtemperatur gerührt. Mit 50 gew.-%iger Natronlauge wird nun der pH Wert der Suspension innerhalb von 45 Minuten auf pH 3,0 eingestellt. Es wird weitere 60 Minuten bei pH 3,0 gerührt. Dann wird mit Natronlauge der pH Wert auf 3,5 angehoben und weitere 60 Minuten bei pH 3,5 gerührt. Dann wird mit Natronlauge der pH Wert auf 4,0 angehoben und weitere 60 Minuten bei pH 4,0 gerührt. Dann wird mit Natronlauge der pH Wert auf 4,5 angehoben und weitere 60 Minuten bei pH 4,5 gerührt. Dann wird mit Natronlauge der pH Wert auf 5,0 angehoben und weitere 120 Minuten bei pH 5,0 gerührt. Während der gesamten Zeit der Dosierung von Natronlauge wird die Temperatur der Suspension durch Kühlung bei 20 - 25 °C gehalten.

Die Suspension wird auf ein Sieb gegeben, man lässt die verbliebene Reaktionslösung ablaufen und wäscht den Ionenaustauscher auf dem Sieb mit voll entsalztem Wasser aus.
Ausbeute : 780 ml
100 ml feuchtes Harz wiegen getrocknet 32,8 Gramm
Eisengehalt : 11,1 Gew. %

## Patentansprüche

1. Verfahren zur Herstellung Eisenoxid/Eisenoxihydroxid-haltiger schwachbasischer Anionenaustauscher, **dadurch gekennzeichnet, dass** man
a) einen perlförmigen schwachbasischen Anionenaustauscher hergestellt nach dem Phthalimidverfahren in wässrigem Medium mit Eisen(II)Salzen oder mit Eisen(III)Salzen in Kontakt bringt und
b) die aus a) erhaltene Mischung durch Zugabe von Alkali- oder Erdalkalihydroxiden auf pH-Werte im Bereich von 2,5 bis 12 einstellt und nach bekannten Methoden die erhaltenen Eisenoxid/Eisenoxihydroxid-enthaltenden Ionenaustauscher isoliert.

2. Verfahren gemäß Anspruch 1, **dadurch gekennzeichnet, dass** monodisperse schwachbasische Anionenaustauscher eingesetzt werden.

3. Verfahren gemäß Anspruch 2, **dadurch gekennzeichnet, dass** monodisperse schwachbasische Anionenaustauscher, deren Vorstufe nach dem Verdüsungsverfahren oder Jetting erhalten wurde, eingesetzt werden.

4. Verfahren gemäß Anspruch 3, **dadurch gekennzeichnet, dass** die monodispersen schwachbasischen Anionenaustauscher eine makroporöse Struktur aufweisen.

5. Verfahren gemäß der Ansprüche 1 bis 4, **dadurch gekennzeichnet, dass** die schwachbasischen Anionenaustauscher primäre und/oder sekundäre und/oder tertiäre Aminogruppen enthalten.

6. Eisenoxid/Eisenoxihydroxid-haltige schwachbasische Anionenaustauscher, erhältlich durch a) in Kontakt bringen eines perlförmigen schwachbasischen Anionenaustauschers hergestellt nach dem Phthalimidverfahren in wässrigem Medium mit Eisen(II)Salzen oder mit Eisen(III)Salzen und b) Einstellen der aus a) erhaltenen Mischung durch Zugabe von Alkali- oder Erdalkalihydroxiden auf pH-Werte im Bereich von 2,5 bis 12 und Isolieren der erhaltenen Ionenaustauscher nach bekannten Methoden.

7. Verwendung Eisenoxid/Eisenoxihydroxid-haltiger schwachbasischer Anionenaustauscher gemäß Anspruch 6 zur Adsorption von Oxoanionen oder deren Thio-Analoga aus Wasser oder wässrigen Lösungen.

8. Verwendung gemäß Anspruch 7, **dadurch gekennzeichnet, dass** die Oxoanionen der Formeln XₙOₘ⁻ , XₙOₘ²⁻, XₙOₘ³⁻, HXₙOₘ⁻ oder H₂XₙOₘ²⁻ worin n für eine ganze Zahl 1, 2, 3 oder 4 steht, m für eine ganze Zahl 3, 4, 6, 7, oder 13 steht und X für ein Metall oder Übergangsmetall der Reihe Au, Ag, Cu, Si, P, S, Cr, Ti, Te, Se, V, As, Sb, W, Mo, U, Os, Nb, Bi, Pb, Co, Ni, Fe, Mn, Ru, Re, Tc, B, Al oder ein Nichtmetall der Reihe F, Cl, Br, J, CN, C, N steht adsorbiert werden.

9. Verfahren zur Adsorption von Oxoanionen aus Wässern oder wässrigen Lösungen, bevorzugt aus Trinkwasser, aus Wässern von Abwasserströmen der chemischen Industrie oder von Müllverbrennungsanlagen sowie von Grubenwässern oder Sickerwässern von Deponien, **dadurch gekennzeichnet, dass** man Eisenoxid/Eisenoxihydroxid-haltige schwachbasische Anionenaustauscher gemäß Anspruch 6 einsetzt.

10. Verfahren gemäß Anspruch 9, **dadurch gekennzeichnet, dass** man die Eisenoxid/Eisenoxihydroxid-haltigen schwachbasischen Anionenaustauscher in von der zu behandelnden Flüssigkeit durchströmbare Vorrichtungen einsetzt.

11. Regenerierungsverfahren zur Regeneration schwachbasischer, nach Phthalimidverfahren hergestellter und Eisenoxid/Eisenoxihydroxid-haltiger Anionenaustauscher, **dadurch gekennzeichnet, dass** man auf diese eine alkalische Natriumchlorid-Lösung einwirken lässt.

12. Regenerierungsverfahren gemäß Anspruch 11, **dadurch gekennzeichnet, dass** man zusätzlich den regenerierten Adsorber mit verdünnten Mineralsäuren behandelt.
